# EUROPÄISCHE PATENTANMELDUNG

(11) **EP 1 172 072 A1**
(43) Veröffentlichungstag der Anmeldung: **16.01.2002**
(21) Anmeldenummer: 00810622.1
(22) Anmeldetag: 14.07.2000
(51) Int. Cl.: A61C 11/08

(54) **Vorrichtung für die Aufnahme von anatomischen Gelenkmodellen**

(71) Anmelder: ISP Individual-System Prothetik AG, 3053 Münchenbuchsee (CH)
(72) Erfinder: Lerch, Peter, 3045 Meikirch (CH)
(74) Vertreter: BOVARD AG - Patentanwälte

(57) **Zusammenfassung**

Eine Vorrichtung für die Aufnahme von anatomischen Gelenkmodellen, insbesondere Artikulator für Kiefermodelle, zur Fixierung in der richtigen Stellung und zum Nachvollziehen des Bewegungsablaufes des entsprechenden Gelenks umfasst einen Ständer (1) mit einem Fussteil (2) und einem diesem gegenüberliegenden, am Ständer (1) angebrachten Bügel (10). Ein Aufnahmeteil (9) ist am Fussteil (2) angebracht, während der andere Aufnahmeteil (11) am Bügel (10) angebracht ist. Der eine Aufnahmeteil (9) ist derart am Fussteil (2) angebracht, dass er bezüglich dieses Fussteils 2 und demzufolge bezüglich des anderen Aufnahmeteils (11) jeweils entlang einer ersten Achse (6), einer zweiten Achse (38) und einer dritten Achse (16) verschiebbar und jeweils um die erste Achse (6), die zweite Achse (38) und die dritte Achse (16) oder jeweils einer parallelen Achse dazu verschwenkbar ist. Hierbei stehen die erste Achse (6), die zweite Achse (38) und die dritte Achse (16) im wesentlichen senkrecht zueinander. Dadurch lässt sich der eine Aufnahmeteil (9) bezüglich des anderen Aufnahmeteils (11) in jede beliebige Lage bringen.

## Beschreibung

Die vorliegende Erfindung bezieht sich auf eine Vorrichtung für die Aufnahme von anatomischen Gelenkmodellen, insbesondere auf einen Artikulator für Kiefermodelle, zur Fixierung in der richtigen Stellung und zum Nachvollziehen des Bewegungsablauf des entsprechenden Gelenks gemäss dem Oberbegriff des Patentanspruchs 1.

Derartige Vorrichtungen sind bekannt. Insbesondere sind Artikulatoren bekannt, welche einen unteren Aufnahmeteil und einen oberen Aufnahmeteil für Unterkiefermodelle und Oberkiefermodelle aufweisen. Hierbei ist der untere Aufnahmeteil fest mit einem Ständer verbunden, der obere Aufnahmeteil ist bezüglich des Ständers und somit dem unteren Aufnahmeteil über eine Gelenkanordnung beweglich, so dass Bewegungsabläufe zwischen Unterkiefer und Oberkiefer nachvollzogen werden können. Wenn nun das Unterkiefermodell in den unteren Aufnahmeteil eingesetzt wird, bewegt sich somit das in den oberen Aufnahmeteil eingesetzte Oberkiefermodell. Wenn das Unterkiefermodell bezüglich des Oberkiefermodells bewegbar sein soll, muss dieses somit in den oberen Aufnahmeteil eingesetzt werden, der Bewegungsablauf erfolgt somit spiegelbildlich zum tatsächlichen Ablauf, was bei den Einstellwerten bzw. den gemessenen Werten berücksichtigt werden muss.

Es sind auch Artikulatoren bekannt, bei welchen die Bewegungsabläufe zwischen Unterkiefer und Oberkiefer zwangsgeführt sind. Ein derartiger Artikulator ist beispielsweise in der DE-A-195 30 157 dargestellt. Dieser Artikulator weist zwischen Ständer und Oberteil einen Gelenkaufbau auf, der einem Kiefergelenk nachgebildet ist. Dieser Gelenkaufbau ist relativ kompliziert, er erlaubt die Nachstellung des Bewegungsablaufs für eine vorgegebene Geometrie mit gewissen Einstellmöglichkeiten, was für das genaue Nachvollziehen des Bewegungsablaufs zwischen Unterkiefer und Oberkiefer nachteilig ist.

Die Aufgabe der vorliegenden Erfindung besteht nun darin, eine Vorrichtung für die Aufnahme von anatomischen Gelenkmodellen, insbesondere einen Artikulator für Kiefermodelle zu schaffen, mit welchem die gegenseitige Lage der Gelenkmodelle in einfacher Weise eingestellt und fixiert werden können, und mit welcher ein exaktes Nachvollziehen des Bewegungsablaufs des entsprechenden Gelenks ebenfalls in einfachster Weise nachvollziehbar ist.

Erfindungsgemäss erfolgt die Lösung dieser Aufgabe durch die im Anspruch 1 aufgeführten Merkmale.

Diese Vorrichtung dient beispielsweise zur Feststellung und Ausmessung von Funktionsstörungen des Kiefergelenks bei Fehlstellung von Zähnen. Die optimale Stellung des Kiefergelenks kann in bekannter Weise (Schluckreflex) durch radiologisch, kernspitographische oder computertomographische Methoden ermittelt werden. Durch die Einstellmöglichkeiten dieser erfindungsgemässen Vorrichtung können die Abweichungen vom Ist-Zustand zum Soll-Zustand für jede Stellung des Kiefergelenks ermittelt und als Entscheidungshilfen zur Festlegung der zu treffenden (therapeutischen) Vorkehrungen ausgenützt werden.

In vorteilhafter Weise ist die erste und die zweite Achse im wesentlichen zu einer durch den Fussteil gebildeten Standebene parallel ausgerichtet und der andere Aufnahmeteil bezüglich des Bügels parallel zur dritten Achse verschiebbar und in jeder Position fixierbar. Dadurch kann der andere Aufnahmeteil bezüglich des einen Aufnahmeteils zu- und abgestellt werden, was insbesondere beim Ausrichten der beiden Aufnahmeteile aufeinander durch eine dazwischen eingesetzte Leere eine einfache Handhabung ermöglicht.

Eine weitere vorteilhafte Ausgestaltung der Erfindung besteht darin, dass der Fussteil zwei Achsstücke aufweist, welche parallel zur ersten Achse ausgerichtet sind und entlang welcher eine Trägerplatte in Richtung der ersten Achse verschiebbar ist, und dass in der Trägerplatte zwei zur dritten Achse parallel ausgerichtete Höhenachsstücke eingesetzt sind, entlang welcher ein Höheneinstellteil verschiebbar gehalten ist und die Verschiebung mittels Verstellmitteln erfolgt. Dadurch wird ein einfacher Aufbau erhalten.

Die Verstellmittel bestehen in bevorzugter Weise aus einer mit einem Gewinde versehenen Stellschraube, die in einem mit einem entsprechenden Gewinde versehenen Bohrung im Höheneinstellteil eingeschraubt ist und deren Ende auf der Trägerplatte abgestützt ist. Dadurch lässt sich eine einfache und genaue Höheneinstellung erreichen.

Im Höheneinstellteil ist ein Schwenkachsstück verdrehbar gehalten, das mittels Feststellmitteln fixierbar ist, das parallel zur ersten Achse ausgerichtet ist und an welchem eine Schwenkplatte befestigt ist. In dieser Schwenkplatte sind zwei Verschiebeachsen angeordnet, die in einer als Nulllage bezeichneten Einstellung parallel zur zweiten Achse ausgerichtet sind und entlang welcher ein Führungsteil verschiebbar ist. Auf dem Führungsteil ist ein Schwenkbügel aufgesetzt, welcher zusammen mit dem Führungsteil verschiebbar ist und welcher zusätzlich um eine der Verschiebeachsen verschwenkbar ist. Dadurch wird in optimaler Weise ein einfacher Aufbau mit den erforderlichen Verstellmöglichkeiten erreicht, der einfach zu verstellen ist.

Der eine Aufnahmeteil ist an einem Drehteil befestigt, welches um eine Drehachse drehbar ist, die in der Nulllage parallel zur dritten Achse ausgerichtet ist.

In vorteilhafter Weise erfolgt die Verschiebung der Trägerplatte entlang der Achsstücke und die Verschiebung des Führungsteils mit dem aufgesetzten Schwenkbügel entlang der Verschiebeachsen durch Verschiebemittel. Dadurch lässt sich eine einfache und genaue Verschiebung erreichen.

In vorteilhafter Weise sind die Verschiebemittel jeweils aus einem Treibrad gebildet, welches um eine Drehachse drehbar ist, und das einen Bereich mit einem kleineren Durchmesser aufweist, der in Kontakt mit einem entsprechenden Achsstück bringbar ist und das einen Bereich mit einem grösseren Durchmesser aufweist, der als Bedienerbereich dient. Die Drehachse des Treibrades ist in länglichen Schlitzen gelagert, derart dass das Treibrad beim Drehen gegen das entsprechende Achsstück drückbar ist. Dadurch kann sowohl in einfacher Weise eine Feineinstellung wie auch ein schnelles Verschieben erreicht werden.

In vorteilhafter Weise sind die verschwenkbaren Teile bzw. die bezüglich dieser verschwenkbaren Teile stillstehenden Teile jeweils mit einer Skala bzw. einer mit dieser Skala zusammenwirkenden Marke versehen und die verschiebbaren Teile bzw. die bezüglich dieser verschiebbaren Teile stillstehenden Teile jeweils mit Messmitteln ausgestattet, mittels welchen der Verschiebeweg messbar ist. Dadurch kann die Verschwenkung bzw. Verschiebung genau festgelegt und gegebenenfalls protokolliert werden, eine Rückstellung in die Nulllage ist problemlos in einfacher Weise möglich.

Alle Verschwenkungs- und Verschiebevorgänge können auch elektronisch und computergesteuert vorgenommen werden. Hierbei werden diese Vorgänge durch Servomotoren und/oder hydraulische Mittel gestützt durchgeführt. Dabei können die Verschwenkungs- und Verschiebevorgänge programmgesteuert oder aber durch Computereingabegeräte wie Maus, Tastatur usw. vorgenommen werden.

Eine weitere vorteilhafte Ausgestaltung der Erfindung besteht darin, dass der Bügel mit dem Ständer über ein Gelenk verbunden ist, wobei die Schwenkachse im wesentlichen parallel zur zweiten Achse ausgerichtet ist. Dadurch kann der Bügel hochgeschwenkt werden, der Zugang auf den einen Aufnahmeteil wird optimal ermöglicht. Die zugeschwenkte Endlage des Bügels bezüglich des Ständers ist durch einen Anschlag festgelegt, die Ausgangslage des anderen Aufnahmeteils zum einen Aufnahmeteil ist demzufolge beim Zuschwenken wieder erreicht.

Eine Ausführungsform der vorliegenden Erfindung wird nachfolgend anhand der beiliegenden Zeichnung beispielhaft näher erläutert.

Es zeigt
Fig. 1 in räumlicher Darstellung eine Ausführungsform der erfindungsgemässen Vorrichtung;
Fig. 2 in räumlicher Darstellung den Ständer der erfindungsgemässen Vorrichtung gemäss Fig. 1 mit aufgesetztem Bügel und getrennt davon die Trägerplatte;
Fig. 3 in räumlicher Darstellung den Ständer mit Bügel und eingesetzter Trägerplatte und getrennt davon den Höheneinstellteil;
Fig. 4 in räumlicher Darstellung den Ständer mit aufgesetztem Bügel, eingesetzter Trägerplatte und Höheneinstellteil und getrennt davon die Schwenkplatte;
Fig. 5 in räumlicher Darstellung den Ständer mit Bügel, eingesetzter Trägerplatte, Höheneinstellteil und Schwenkplatte, und getrennt davon den Führungsteil;
Fig. 6 in räumlicher Darstellung den Ständer mit Bügel, eingesetzter Trägerplatte, Höheneinstellteil und Schwenkplatte, und getrennt davon den Führungsteil;
Fig. 7 in räumlicher Darstellung die erfindungsgemässe Vorrichtung mit abgenommenem einen Aufnahmeteil;
Fig. 8 in räumlicher Darstellung eine Ansicht von der anderen Seite auf einen Teil der erfindungsgemässen Vorrichtung gemäss Fig. 1;

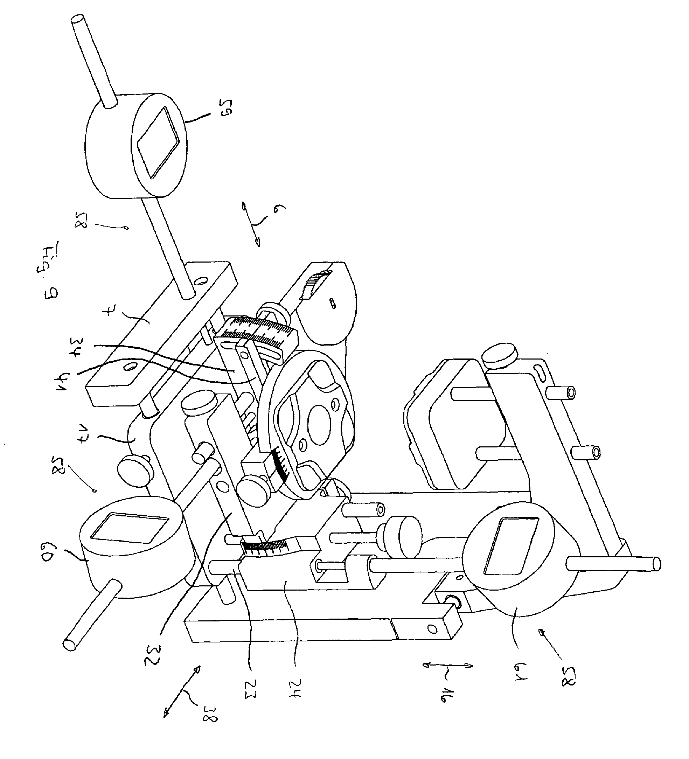

Fig. 9 in räumlicher Darstellung eine andere Ansicht auf die erfindungsgemässe Vorrichtung gemäss Fig. 1 mit eingesetzten Messmitteln;
Fig. 10a bis 10c eine Darstellung der Verschiebemittel;
Fig. 11 in räumlicher Darstellung eine Ansicht auf die erfindungsgemässe Vorrichtung gemäss Fig. 1, mit welcher das Bonvillsche Dreieck darstellbar ist; und
Fig. 12 in räumlicher Darstellung eine Ansicht auf die erfindungsgemässe Vorrichtung gemäss Fig. 1 mit hochgeschwenktem Bügel.

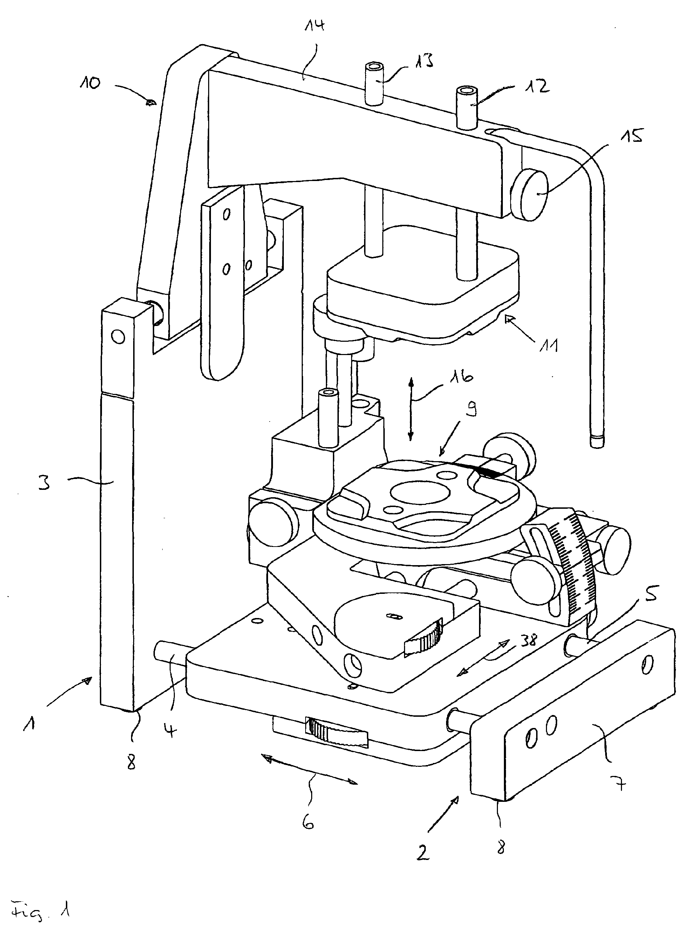

Wie aus Fig. 1 ersichtlich ist, umfasst die erfindungsgemässe Vorrichtung für die Aufnahme von anatomischen Gelenkmodellen einen Ständer 1 mit einem Fussteil 2. Der Ständer 1 weist hierbei eine Rückwand 3 auf, in welchen als Fussteil 2 zwei Achsstücke 4 und 5 eingesetzt sind, die parallel zu einer ersten Achse 6 verlaufen. Die der Rückwand 3 abgewandten Endbereiche der Achsstücke 4 und 5 sind über einen Quersteg 7 miteinander verbunden. An der Rückwand 3 und an diesem Quersteg 7 sind Fusselemente 8 angebracht, welche die Standebene für die erfindungsgemässe Vorrichtung bilden. Wie später noch im Detail beschrieben wird, ist der eine Aufnahmeteil 9, auf welchem die eine Hälfte des Gelenkmodells aufgesetzt werden kann, am Fussteil 2 angebracht.

An der Rückwand 3 ist ein Bügel 10 verschwenkbar befestigt, wie später noch beschrieben wird. Am Ausleger dieses Bügels 10 ist der andere Aufnahmeteil 11 angeordnet. Dieser andere Aufnahmeteil 11, in welchem die andere Hälfte des Gelenkmodells eingesetzt werden kann, umfasst zwei Bolzen 12 und 13, die verschiebbar im Ausleger 14 gehalten sind und über eine Feststellschraube 15 arretierbar sind. Diese beiden Bolzen 12 und 13 sind parallel zur dritten Achse 16 ausgerichtet, die senkrecht zur ersten Achse 6 und senkrecht zur Standfläche steht. Der andere Aufnahmeteil 11, der am Bügel 10 befestigt ist, ist somit gegenüberliegend zum einen Aufnahmeteil 9, angebracht am Fussteil 2, und bezüglich des einen Aufnahmeteils 9 höhenverstellbar.

Die beiden Aufnahmeteile 9 und 11 sind mit bekannten Aufnahmeelementen ausgestattet, in welche entsprechend an den nicht dargestellten Gelenkmodellen angebrachte Elemente passend einsetzbar sind und beispielsweise über Magnete gehalten sind.

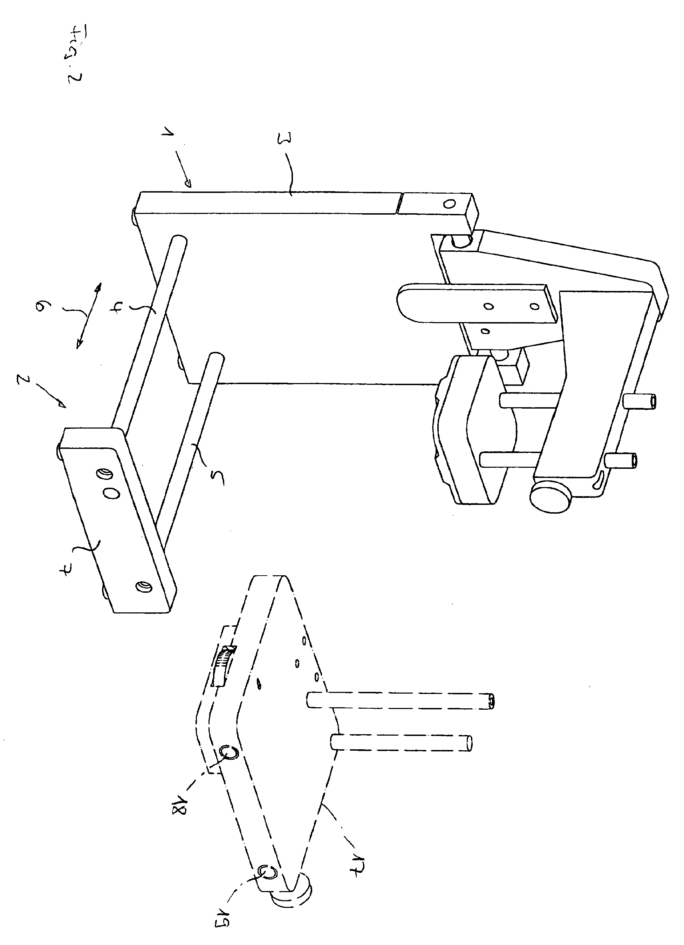

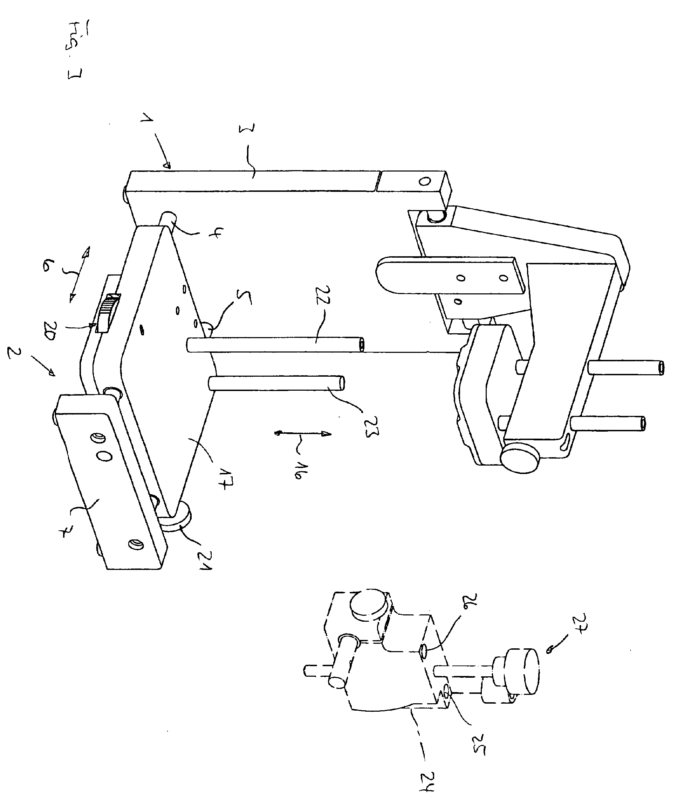

Nachfolgend wird nun beschrieben, wie der eine Aufnahmeteil 9 am Fussteil 2 des Ständers 1 angebracht ist. Wie aus Fig. 2 ersichtlich ist und wie bereits erwähnt worden ist, sind an der Rückwand 3 des Ständers 1 zwei zur ersten Achse 6 parallel verlaufende Achsstücke 4 und 5 angebracht, die mit einem Quersteg 7 verbunden sind. Daneben ist strichpunktiert eine Trägerplatte 17 dargestellt, die mit zwei durchgehenden Bohrungen 18 und 19 versehen ist. Diese Trägerplatte 17 ist so am Fussteil 2 des Ständers 1 angebracht, dass die beiden Achsstücke 4 und 5 durch die Bohrungen 18 und 19 hindurchragen, wodurch diese Trägerplatte 17 entlang dieser Achsstücke 4 und 5 verschiebbar ist. Diese Situation ist aus Fig. 3 ersichtlich. Die Trägerplatte 17 ist demzufolge entlang der Achsstücke 4 und 5 parallel zur ersten Achse 6 verschiebbar, wozu die Trägerplatte 17 mit Verschiebemitteln 20 ausgestattet ist, die später noch im Detail beschrieben werden. Des weiteren ist an der Trägerplatte 17 eine Feststellschraube 21 vorgesehen, mit welcher die eingestellte Lage in Richtung der ersten Achse 6 die Trägerplatte 17 in bekannter Weise arretiert werden kann.

In die Trägerplatte 17 sind zwei Höhenachsstücke 22 und 23 eingesetzt, welche parallel zur dritten Achse 16 ausgerichtet sind. Auf diese Höhenachsstücke 22 und 23 wird ein Höheneinstellteil 24 aufgeschoben, welcher in Fig. 3 separat und strichpunktiert dargestellt ist. Hierzu ist dieser Höheneinstellteil 24 mit zwei durchgehenden Bohrungen 25 und 26 versehen, durch welche im aufgesetzten Zustand des Höheneinstellteils 24 die Höhenachsstücke 22 und 23 hindurchragen. Dieser Höheneinstellteil ist somit entlang der dritten Achse verschiebbar, wozu Verstellmittel 27 vorgesehen sind, die nachfolgend beschrieben werden.

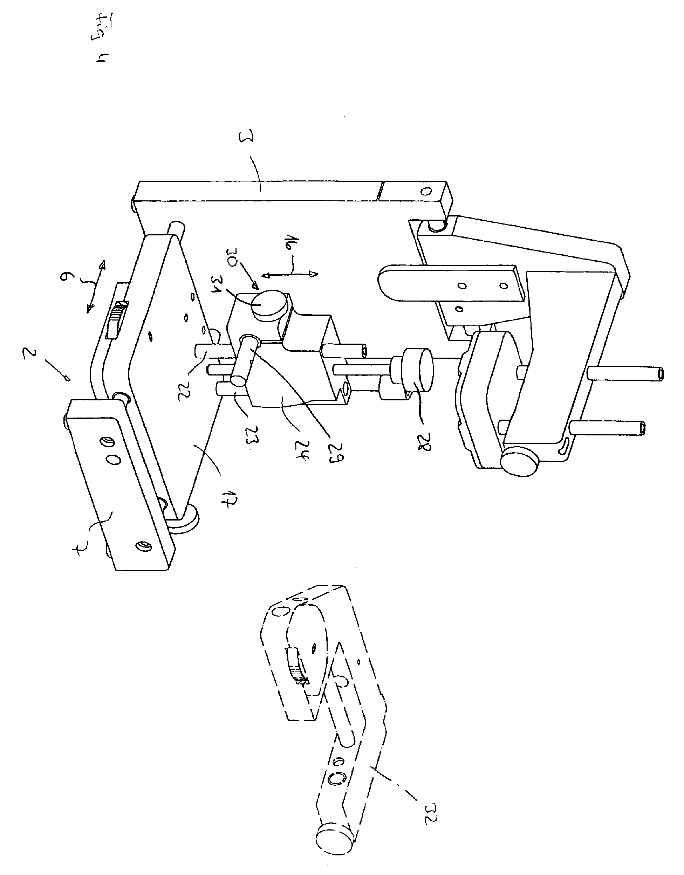

Wie aus Fig. 4 ersichtlich ist, in welcher der Höheneinstellteil 24 auf die Höhenachsstücke 22 und 23 aufgesetzt ist, bestehen die Verstellmittel 27 aus einer mit einem Gewinde versehenen Stellschraube 28. Diese Stellschraube 28 ist in einer mit einem entsprechenden Gewinde versehenen durchgehenden Bohrung im Höheneinstellteil 24 eingeschraubt, welche parallel zu den Höhenachsstücken 22, 23 ausgerichtet ist. Das Ende dieser Stellschraube 28 stützt sich auf der Trägerplatte 17 ab, durch Verdrehen dieser Stellschraube 28 kann der Höheneinstellteil 24 entlang der Höhenachsstücke 22 und 23 verschoben und auf die entsprechende Höhe eingestellt werden. Das Höhenachsstück 23 weist eine genau definierte Länge auf, so dass, wenn die entsprechende Fläche dieses Höhenachsstückes 23 mit der Stirnfläche des Höheneinstellteils 24 bündig ist, das Höheneinstellteil 24 auf eine Höhe eingestellt ist, die einer Nulllage entspricht.

Wie insbesondere aus Fig. 4 ersichtlich ist, ist im Höheneinstellteil 24 ein Schwenkachsstück 29 verdrehbar gehalten und mittels Feststellmitteln 30 fixierbar. Das Schwenkachsstück 29 ist parallel zu der ersten Achse 6 ausgerichtet, die Feststellmittel 30 bestehen in bekannter Weise aus einer Klemmschraube 31.

Das Schwenkachsstück 29 ist an einer Schwenkplatte 32 befestigt, die in Fig. 4 strichpunktiert dargestellt ist und vom Schwenkachsstück 29 getrennt ist.

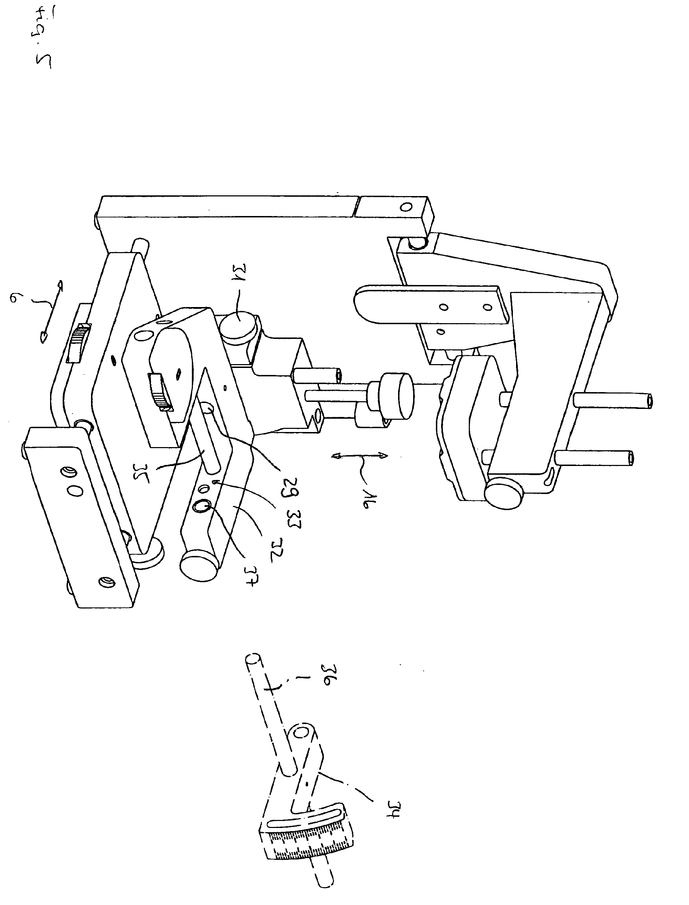

In Fig. 5 ist die Schwenkplatte 32 im am Schwenkachsstück 29 befestigten Zustand dargestellt. Beim Lösen der Klemmschraube 31 kann somit die Schwenkplatte 32 um das Schwenkachsstück 29 verschwenkt werden.

Die Schwenkplatte 32 ist mit einer Ausnehmung 33 versehen, in welche ein Führungsteil 34 zu liegen kommt, welches in Fig. 5 strichpunktiert und von der Schwenkplatte 32 getrennt dargestellt ist. Zur Halterung dieses Führungsteils 34 ist eine erste Verschiebeachse 35 vorgesehen, die in der Schwenkplatte 32 gehalten ist, und die sich über die Ausnehmung 33 erstreckt. Des weiteren ist eine dazu parallel ausgerichtete zweite Verschiebeachse 36 vorgesehen, die parallel zur ersten Verschiebeachse 35 ausgerichtet ist, und welche in Führungen 37, die in der Schwenkplatte 32 angebracht sind, verschiebbar gelagert ist. Die zweite Verschiebeachse 36 ist mit dem Führungsteil 34 fest verbunden.

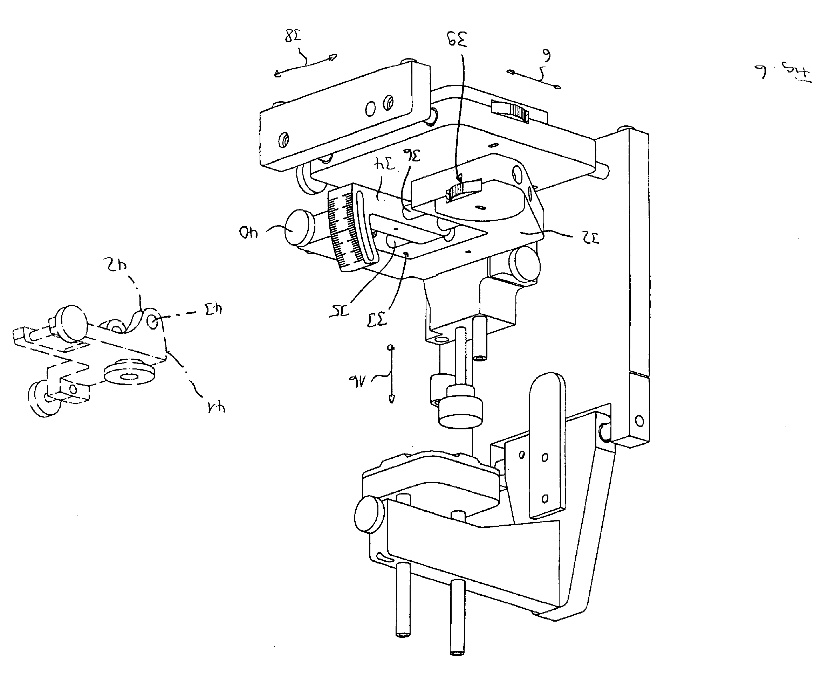

Wie aus Fig. 6 ersichtlich ist, ist somit der Führungsteil 34 in der Ausnehmung 33 der Schwenkplatte 32 entlang der ersten und zweiten Verschiebeachse 35, 36 verschiebbar. Die Verschiebeachsen 35 und 36 sind, wenn sich die Schwenkplatte 32 in einer unverschwenkten Nulllage befindet, parallel zu einer zweiten Achse 38 verschiebbar, welche zweite Achse 38 senkrecht zur ersten Achse 6 und zur dritten Achse 16 steht. Zur Verschiebung des Führungsteils 34 entlang der Verschiebeachsen 35 und 36 sind wiederum Verschiebemittel 39 vorgesehen, die später noch genau beschrieben werden. Die Verschiebelage des Führungsteils 34 bezüglich der Schwenkplatte 32 kann wiederum in bekannter Weise durch eine Klemmschraube 40 fixiert werden.

Auf den Führungsteil 34 aufgesetzt ist ein Schwenkbügel 41, der in Fig. 6 in getrennter Lage und strichpunktiert dargestellt ist. Dieser Schwenkbügel 41 umfasst zwei Laschen 42, die den Führungsteil 34 im Bereich der ersten Verschiebeachse 35 umschliessen und die mit Bohrungen 43 versehen sind, durch welche die erste Verschiebeachse 35 hindurchragt, so dass dieser Schwenkbügel 41 um die erste Verschiebeachse 35 verschwenkbar ist und zusammen mit dem Führungsteil 34 entlang der ersten Verschiebeachse 35 verschiebbar ist.

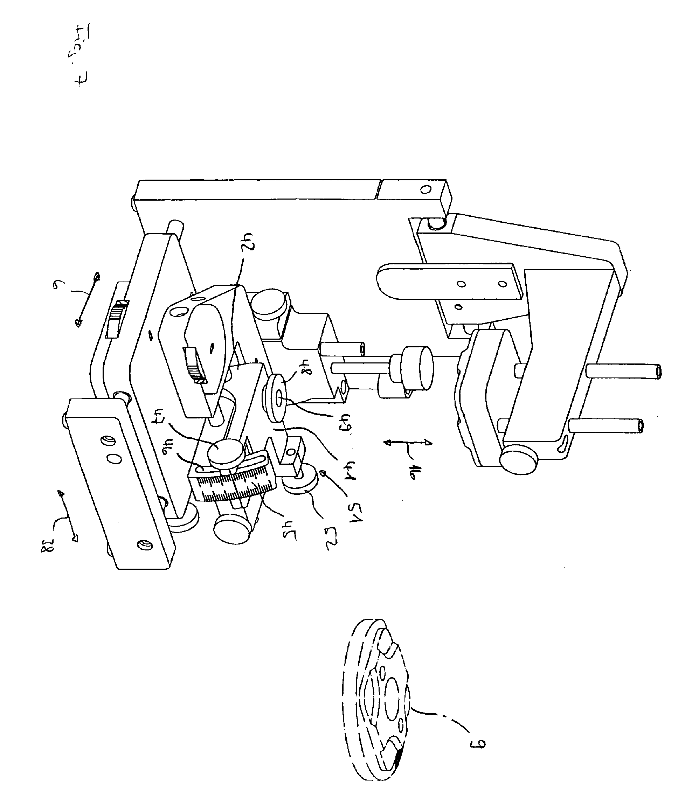

In Fig. 7 ist der Schwenkbügel 41 im eingesetzten Zustand dargestellt. Der Schwenkbügel 41 ist im Endbereich, das der ersten Verschiebeachse 35 abgewandt ist, mit einer Gabel 44 ausgestattet, welche einen Vorsprung 45 umschliessen, der am Führungsteil 34 angebracht ist. Der Vorsprung 45 ist mit einer schlitzförmigen Ausnehmung 46 ausgestattet. In die Gabel 44 einschraubbar ist eine weitere Klemmschraube 47, die durch die schlitzförmige Ausnehmung 46 des Vorsprungs 45 hindurchragt. Der Vorsprung 45 und die schlitzförmige Ausnehmung sind so angeordnet, dass der Schwenkbügel 41 verschwenkbar ist, und die verschwenkte Lage durch Festziehen der Klemmschraube 47 bezüglich des Vorsprungs 45 fixierbar ist.

Auf dem Schwenkbügel 41 ist ein Drehteil 48 angeordnet, welches um eine Drehachse 49 drehbar ist, die in einer unausgeschwenkten Lage des Schwenkbügels 41, das der Nulllage entspricht, parallel zur dritten Achse 16 ausgerichtet ist. An diesem Drehteil 48 ist der eine Aufnahmeteil 9 befestigbar, der in Fig. 7 strichpunktiert und getrennt vom Drehteil 48 dargestellt ist, und der somit um die Drehachse 49 verdrehbar ist.

Am Schwenkbügel 41 ist eine Klemmeinrichtung 50 angebracht, die mit einer Klemmschraube 52 ausgestattet ist, und mittels welcher die entsprechende Drehlage des einen Aufnahmeteils 9 bezüglich der Drehachse 49 fixierbar ist. Der Zustand, in welchem der eine Aufnahmeteil 9 auf den Drehteil 48 aufgesetzt ist, ist der Fig. 1 entnehmbar.

Aus der vorgängig gemachten Beschreibung mit Bezugnahme auf die Fig. 1 bis 7 ist klar ersichtlich, wie der eine Aufnahmeteil 9 bezüglich des Ständers 1 und demzufolge des anderen Aufnahmeteils 11 um die erste Achse 6, die zweite Achse 38 und die dritte Achse 16 schwenkbar und entlang dieser drei genannten Achsen verschiebbar ist. Dadurch kann der eine Aufnahmeteil 9 innerhalb im erforderlichen Bereich in jede beliebige Position gebracht werden.

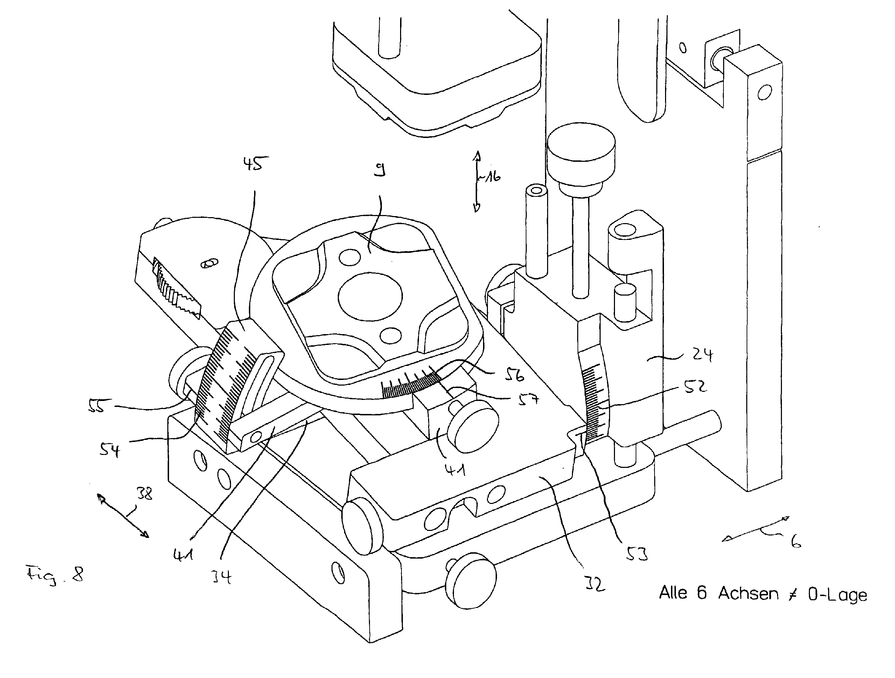

Wie aus Fig. 8 ersichtlich ist, ist am Höheneinstellteil 24 eine Skala 52 angebracht, die mit einer Marke 53 zusammenwirkt, die an der Schwenkplatte 32 angebracht ist. Dadurch lässt sich die Lage der Schwenkplatte 32 bezüglich des Höheneinstellteils 24 feststellen, die sie beim Verschwenken um eine zur ersten Achse 6 parallelen Achse einnimmt.

Auf dem Führungsteil 34 ist auf dessen Vorsprung 45 ebenfalls eine Skala 54 angebracht, die mit einer Marke 55 zusammenwirkt, die am Schwenkbügel 41 angebracht ist. Damit lässt sich die Schwenklage um eine Achse feststellen, die parallel zur zweiten Achse 38 ausgerichtet ist.

Am einen Aufnahmeteil 9 ist ebenfalls eine Skala 56 angebracht, die mit einer Marke 57 zusammenwirkt, die am Schwenkbügel 41 angebracht ist. Damit lässt sich die Verdrehung des einen Aufnahmeteils 9 bezüglich des Schwenkbügels 41 feststellen, was einer Verdrehung um die dritte Achse 16 entspricht.

Auch die Verschiebung der entsprechenden Teile längs der ersten Achse 6, der zweiten Achse 38 und der dritten Achse 16 lassen sich durch Messmittel 58 durch eine entsprechende Messgrösse festlegen. Zur Messung des Verschiebeweges der Trägerplatte 17 bezüglich des Fussteils 2 ist der Quersteg 7 mit einer Aufnahme für eine erste Messuhr 59 ausgestattet. Der Fühler dieser Messuhr 59 ist in Kontakt mit der Trägerplatte 17, die Verschiebung lässt sich somit durch die Messuhr 59 messen.

In gleicher Weise lässt sich der Verschiebeweg des Führungsteils 34 zusammen mit dem Schwenkbügel 41 bezüglich der Schwenkplatte 32 mit einer weiteren Messuhr 60 in Richtung der zweiten Achse 38 messen. Eine weitere Messuhr 61 ist vorgesehen zur Messung des Verschiebeweges in Richtung der dritten Achse 16. Hierzu ist am Höheneinstellteil 24 eine Einrichtung zur Aufnahme dieser Messuhr 61 angebracht, der Messfühler dieser Messuhr 61 ist in Kontakt mit der Stirnfläche des Höhenachsstückes 23. Dadurch lässt sich der Verschiebeweg in Richtung der dritten Achse 16 messen.

Die Verschwenkungen und die Verschiebewege können auch durch elektronische Messmittel gemessen werden. Diese Messwerte können dann direkt einem Computer zugeführt werden, wo die entsprechenden Daten für eine spätere Verwendung abgespeichert und/oder verarbeitet werden.

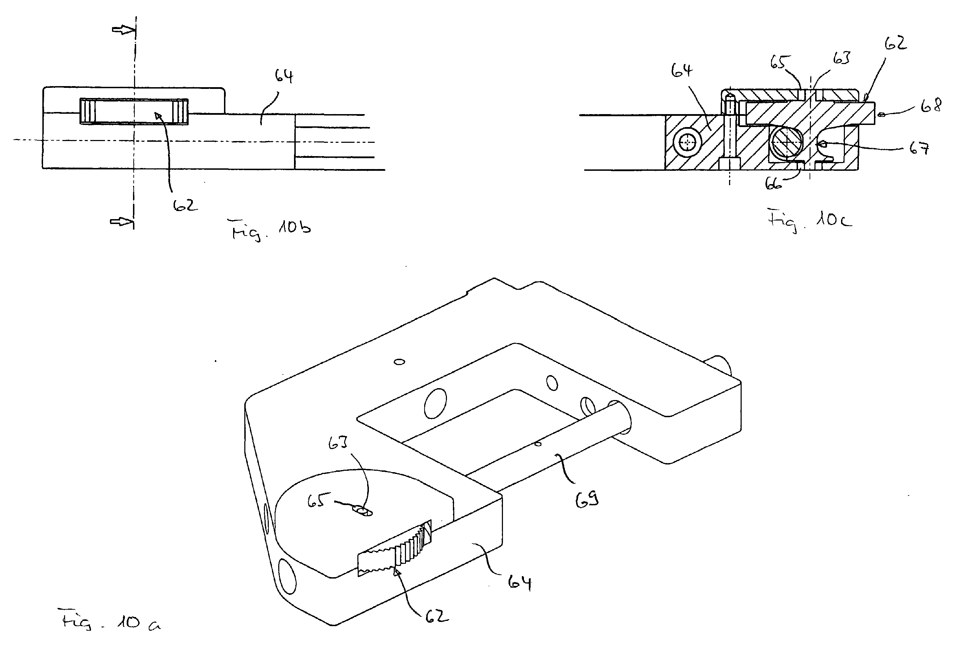

Wie vorgängig beschrieben worden ist, sind zur Verschiebung der Trägerplatte 17 bezüglich des Fussteils in Richtung der ersten Achse 6 und zur Verschiebung des Führungsteils zusammen mit dem Schwenkbügel in Richtung der zweiten Achse 38 bezüglich der Schwenkplatte 32 Verschiebemittel 20 bzw. 39 vorgesehen. Diese Verschiebemittel werden nachfolgend mit Bezugnahme auf die Fig. 10a bis 10c näher erläutert. Die Verschiebemittel bestehen aus einem Treibrad 62, das mit einer Drehachse 63 ausgestattet ist. Das Treibrad 62 ist um diese Drehachse 63 drehbar im jeweils feststehenden Teil 64 gelagert. Hierzu sind im feststehenden Teil 64 jeweils zwei längliche Schlitze 65, 66 angebracht, in welchen die Drehachse 63 verschiebbar gehalten ist. Das Treibrad 62 weist einen Bereich 67 mit einem kleineren Durchmesser und einem Bereich 68 mit einem grösseren Durchmesser auf. Der Bereich 67 mit dem kleineren Durchmesser ist durch Verschieben des Treibrades 62 entlang der länglichen Schlitze 65, 66 mit dem zu verschiebenden Achsstück 69 in Kontakt bringbar, was durch Drehen am Bereich 68 mit dem grösseren Durchmesser des Treibrades 62 durch eine Bedienerperson erfolgt, welche den entsprechenden Druck auf das Treibrad 62 ausübt. Durch das Drehen des Treibrades 62 wird das zu verschiebende Achsstück 69 in gewünschter Weise in Längsrichtung verschoben, wodurch das entsprechende Element, das mit dem Achsstück 69 verbunden ist, verschoben wird. Der Bereich 67 mit dem kleineren Durchmesser kann auch in Form einer umlaufenden Rille ausgebildet sein, die das zu verschiebende Achsstück 69 in optimaler Weise umgibt, wodurch eine sichere Verschiebefunktion gewährleistet ist. Mit dieser Verstelleinrichtung lässt sich eine sehr feine Verschiebung durchführen, das Achsstück 69 kann aber auch ohne Zuhilfenahme des Treibrades 62 verschoben werden, das sich bei diesem Vorgang vom Achsstück 69 wegbewegt.

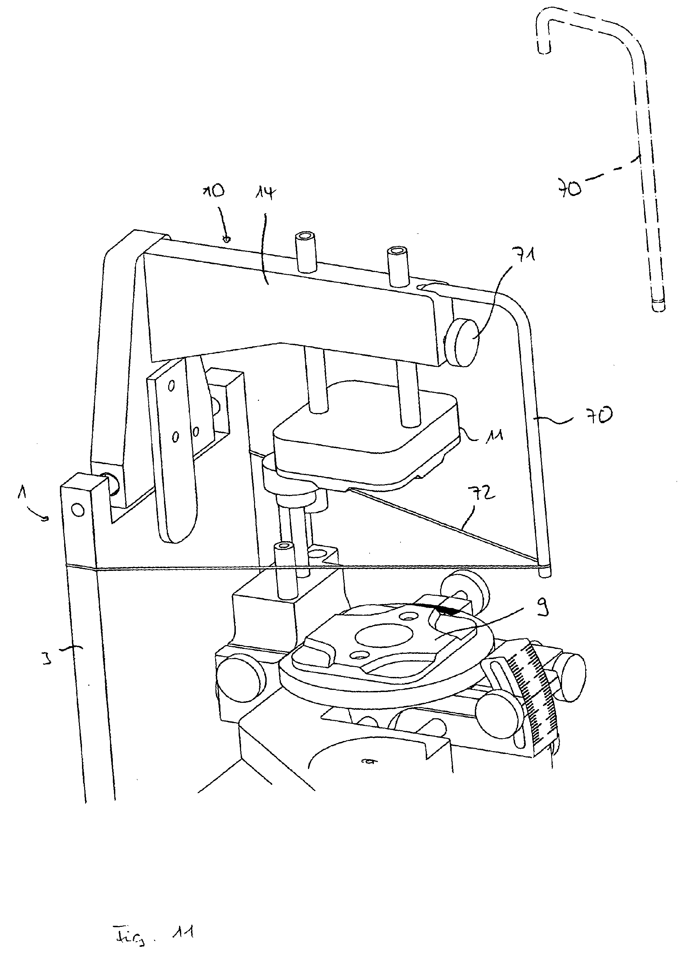

Wie aus Fig. 11 ersichtlich ist, kann in den Ausleger 14 des Bügels 10 ein Stab 70 eingesetzt werden und mittels einer Klemmschraube 71 gehalten werden. Dieser Stab 70 ist so gebogen, dass sein Endbereich in eine Ebene zwischen dem einen Aufnahmeteil und dem anderen Aufnahmeteil 11 hineinragt. In diesem Bereich ist eine Kerbe angebracht, in welche ein Gummiband 72 legbar ist. Dieses Gummiband 72 ist auch um die Rückwand 3 des Ständers 1 legbar, wozu auch hier entsprechende Kerben angebracht sind. Mit diesem Gummiband 72 wird ein Dreieck gebildet (Bonvillsche Dreieck), welches eine Bezugsebene für die Gelenkmodelle, die in den Aufnahmeteilen 9 und 11 eingesetzt sind, bildet.

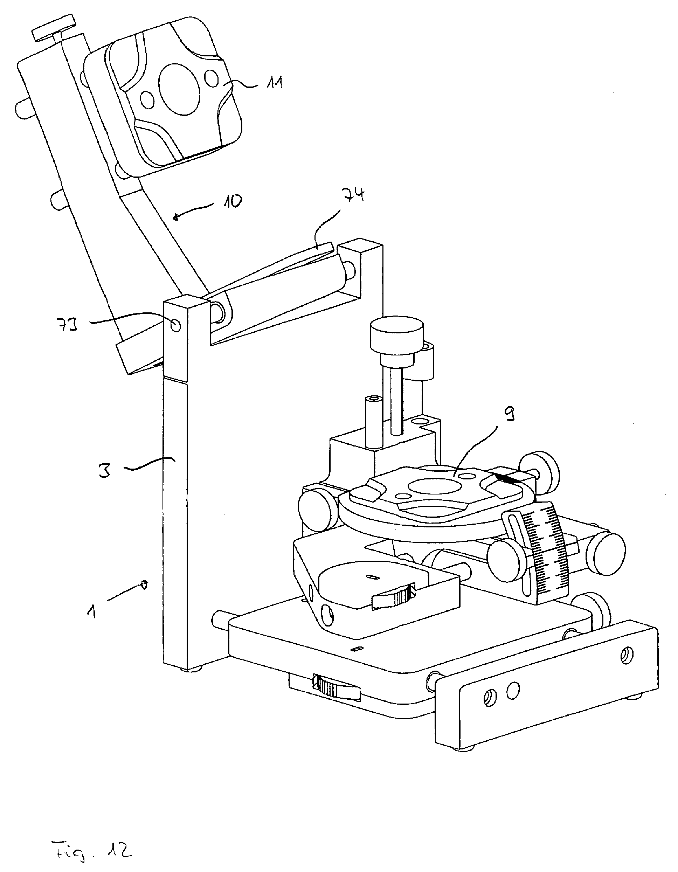

Wie aus Fig. 12 ersichtlich ist, ist der Bügel 10 über eine Schwenkachse 73 mit der Rückwand 3 des Ständers 1 gelenkig verbunden. Dadurch lässt sich der Bügel 10 mit dem anderen Aufnahmeteil 11 in die in Fig. 12 dargestellte hochgeschwenkte Lage bringen, wodurch der Zugang auf den einen Aufnahmeteil 9 optimal möglich ist. Die zugeschwenkte Lage des Bügels 10, wie sie in den vorgängigen Figuren ersichtlich ist, wird durch einen Anschlag 74 genau positioniert.

Mit dieser erfindungsgemässen Vorrichtung lässt sich die eine Hälfte eines Gelenkmodells, die im einen Aufnahmeteil 9 angebracht ist, bezüglich der anderen Hälfte des Gelenkmodells, das im anderen Aufnahmeteil 11 gehalten ist, in jede beliebige Lage bringen. Dadurch können Bewegungsabläufe, die durch das Gelenk zugelassen werden, nachvollzogen werden, es können Fehlstellungen der Gelenke festgestellt und ausgemessen werden, es lassen sich Fehlfunktionen ermitteln, wobei die Korrekturen, die derartige Fehlstellungen bzw. Fehlfunktionen vermeiden helfen, aufgrund der gemachten Messungen festgelegt und ausgeführt werden können. Die angeordneten Korrekturen können genau kontrolliert werden, es lassen sich aufgrund der gemessenen Grössen Protokolle erstellen. Eine Rückstellung in eine Ausgangslage ist jeder Zeit problemlos möglich. Diese erfindungsgemässe Vorrichtung lässt sich auch zur Demonstration von Bewegungsabläufen verwenden.

## Patentansprüche

1. Vorrichtung für die Aufnahme von anatomischen Gelenkmodellen, insbesondere Artikulator für Kiefermodelle, zur Fixierung in der richtigen Stellung und zum Nachvollziehen des Bewegungsablaufs des entsprechenden Gelenks, welche einen Ständer (1) mit einem Fussteil (2) und einem diesem gegenüberliegenden, am Ständer (1) angebrachten Bügel (10) sowie Aufnahmeteile (9, 11) für die Gelenkmodelle umfasst, wovon der eine Aufnahmeteil (9) am Fussteil (2) angebracht ist und der andere Aufnahmeteil (11) am Bügel (10) angebracht ist, und die beiden Aufnahmeteile (9, 11) relativ zueinander bewegbar und fixierbar sind, **dadurch gekennzeichnet, dass** der eine Aufnahmeteil (9) derart am Fussteil (2) angebracht ist, dass er bezüglich dieses Fussteils (2) und demzufolge bezüglich des andern Aufnahmeteils (11) jeweils entlang einer ersten Achse (6), einer zweiten Achse (38) und einer dritten Achse (16) verschiebbar und jeweils um die erste Achse (6), die zweite Achse (38) und die dritte Achse (16) oder jeweils einer parallelen Achse dazu verschwenkbar ist, und die erste Achse (6), die zweite Achse (38) und die dritte Achse (16) im wesentlichen senkrecht zueinander stehen.

2. Vorrichtung nach Anspruch 1, **dadurch gekennzeichnet, dass** die erste Achse (6) und die zweite Achse (38) im wesentlichen zu einer durch den Fussteil (2) gebildeten Standebene parallel ausgerichtet sind und dass der andere Aufnahmeteil (11) bezüglich des Bügels (10) parallel zur dritten Achse (16) verschiebbar und in jeder Position fixierbar ist.

3. Vorrichtung nach Anspruch 1 oder 2, **dadurch gekennzeichnet, dass** der Fussteil (2) zwei Achsstücke (4, 5) aufweist, welche parallel zur ersten Achse (6) ausgerichtet sind und entlang welcher eine Trägerplatte (17) in Richtung der ersten Achse (6) verschiebbar ist, und dass in der Trägerplatte (17) zwei zur dritten Achse (16) parallel ausgerichtete Höhenachsstücke (22, 23) eingesetzt sind, entlang welcher ein Höheneinstellteil (24) verschiebbar gehalten ist, und die Verschiebung mittels Verstellmitteln (27) erfolgt.

4. Vorrichtung nach Anspruch 3, **dadurch gekennzeichnet, dass** die Verstellmittel (27) aus einer mit einem Gewinde versehenen Stellschraube (28) gebildet sind, die in einer mit einem entsprechenden Gewinde versehenen Bohrung im Höheneinstellteil (24) eingeschraubt ist und deren Ende auf der Trägerplatte (17) abgestützt ist.

5. Vorrichtung nach Anspruch 3 oder 4, **dadurch gekennzeichnet, dass** im Höheneinstellteil (24) ein Schwenkachsstück (29) verdrehbar gehalten und mittels Feststellmitteln (30) fixierbar ist, welches Schwenkachsstück (29) parallel zur ersten Achse (6) ausgerichtet ist.

6. Vorrichtung nach Anspruch 5, **dadurch gekennzeichnet, dass** das Schwenkachsstück (29) in einer Schwenkplatte (32) befestigt ist, in welcher zwei Verschiebeachsen (35, 36) angeordnet sind, die in einer als Nulllage bezeichneten Einstellung parallel zur zweiten Achse (38) ausgerichtet sind und entlang welcher ein Führungsteil (34) verschiebbar ist.

7. Vorrichtung nach Anspruch 6, **dadurch gekennzeichnet, dass** auf den Führungsteil (34) ein Schwenkbügel (41) aufgesetzt ist, welcher zusammen mit dem Führungsteil (34) verschiebbar ist, und welcher zusätzlich um eine der Verschiebeachsen (35) schwenkbar ist.

8. Vorrichtung nach Anspruch 7, **dadurch gekennzeichnet, dass** auf dem Schwenkbügel (41) ein Drehteil (48) angeordnet ist, welches um eine Drehachse (49) drehbar ist, die in der Nulllage parallel zur dritten Achse (16) ausgerichtet ist, und auf welchen Drehteil (48) der eine Aufnahmeteil (9) befestigbar ist.

9. Vorrichtung nach einem der Ansprüche 3 oder 7, **dadurch gekennzeichnet, dass** die Verschiebung der Trägerplatte (17) entlang der Achsstücke (4, 5) und die Verschiebung des Führungsteils (34) mit dem aufgesetzten Schwenkbügel (41) entlang der Verschiebeachsen (35, 36) durch Verschiebemittel (20, 39) erfolgt.

10. Vorrichtung nach Anspruch 9, **dadurch gekennzeichnet, dass** die Verschiebemittel (20, 39) jeweils aus einem Treibrad (62) gebildet sind, welches um eine Drehachse (63) drehbar ist, und das einen Bereich (67) mit einem kleineren Durchmesser aufweist, der in Kontakt mit einem entsprechenden Achsstück (69) bringbar ist und das einen Bereich (68) mit einem grösseren Durchmesser aufweist, der als Bedienerbereich dient.

11. Vorrichtung nach Anspruch 10, **dadurch gekennzeichnet, dass** die Drehachse (63) des Treibrades (62) in länglichen Schlitzen (65, 66) gelagert ist, derart dass das Treibrad (62) beim Drehen gegen das entsprechende Achsstück (69) drückbar ist.

12. Vorrichtung nach einem der Ansprüche 1 bis 11, **dadurch gekennzeichnet, dass** die verschwenkbaren Teile bzw. die bezüglich dieser verschwenkbaren Teile stillstehenden Teile jeweils mit einer Skala (52, 54, 56) bzw. einer mit dieser Skala zusammenwirkenden Marke (53, 55, 57) versehen sind.

13. Vorrichtung nach einem der Ansprüche 1 bis 12, **dadurch gekennzeichnet, dass** die verschiebbaren Teile bzw. die bezüglich dieser verschiebbaren Teile stillstehenden Teile jeweils mit Messmitteln (58) ausgestattet sind, mittels welchen der Verschiebeweg messbar ist.

14. Vorrichtung nach Anspruch 13, **dadurch gekennzeichnet, dass** diese Messmittel (58) Längenmessuhren (59, 60, 61) sind.

15. Vorrichtung nach einem der Ansprüche 1 bis 14, **dadurch gekennzeichnet, dass** der Bügel (10) mit dem Ständer (1) über ein Gelenk verbunden ist, wobei die Schwenkachse (73) im wesentlichen parallel zur zweiten Achse (38) ausgerichtet ist.

16. Vorrichtung nach Anspruch 15, **dadurch gekennzeichnet, dass** die zugeschwenkte Endlage des Bügels (10) bezüglich des Ständers (1) durch einen Anschlag (74) festgelegt ist.

17. Vorrichtung nach einem der Ansprüche 1 bis 16, **dadurch gekennzeichnet, dass** sie mit Servomotoren und/oder hydraulischen Geräten versehen ist, welche eine zentrale Steuerung der Schwenk- und Verschiebevorgänge auf elektronischem Weg und die Erfassung der entsprechenden Daten mittels EDV erlauben.
